# EUROPEAN PATENT APPLICATION

(11) **EP 2 903 304 A1**
(43) Date of publication of application: **05.08.2015**
(21) Application number: 14153298.6
(22) Date of filing: 30.01.2014
(51) Int. Cl.: H04W 4/02, H04L 29/06

(54) **Multiple subscriber location support in ims networks**

(71) Applicant: ALCATEL LUCENT, 92100 Boulogne-Billancourt (FR)
(72) Inventor: Le Razavet, Olivier, 22304 Lannion (FR)
(74) Representative: Camus, Olivier Jean-Claude

(57) **Abstract**

A Session Initiation Protocol node comprising an interface between a subscriber location input format for the node, and a subscriber location output format for the node.

## Description

The invention applies in general to Internet Protocol Multimedia Subsystem (IMS) networks and more specifically to the elements or nodes, which can be servers or applications, involved in a multimedia Session Initiation Protocol (SIP) over such networks.

An IMS network is implemented via IMS nodes, which are internet protocols (IP) routers linked together by data links implementing a base protocol. The SIP protocol is used to transport the information about the location of a user equipment (UE) serviced by the network. Such information or subscriber location is provided by the UE or the PCRF for mobile network while this information is provided by the CLF for fixed network. In the art prior to the invention, subscriber location information, provided by a user equipment or the network, is simply carried over an IMS network transparently and is useless for the network.

With the new mobile network, in particular the LTE network, new type of location format have been defined and therefore those formats have been added to the current format already defined by fixed network such as the INSEE code useful for routing purpose. There is so a need in the prior art for supporting multiple subscriber location formats usage in IMS networks.

However, most of the SIP protocol currently deployed are not able to transport multiple subscriber locations, for instance by providing several PANI headers in the same SIP session, the headers carrying each one format, or by providing multiple formats sent through a single PANI header of a SIP session.

Hence, multiple subscriber locations transport is not supported by the SIP stack of the majority of nodes in existing IMS networks, in prior art. Thus, a new standardization and a complete change of an IMS network seem to be the only solution for implementing the support of multiple subscriber location formats on existing IMS networks. This prevents strongly the deployment of multiple subscriber location support from being installed in IMS networks.

Moreover, even though a complete network is modified to support multiple subscriber locations, the interworking with other existing IMS networks still remains difficult and functionality based on multiple subscriber location does not work as expected when multiple subscriber location formats support is requested from these other existing IMS networks.

As a consequence a new IMS standard seems the only solution to obtain the support multiple subscriber location formats usage in IMS networks, with the corresponding delay and cost associated with such a huge change in network IMS equipments.

As a result, several usages or needs of multiple subscriber location support in IMS networks are not fulfilled in prior art, as the following functionalities, all desirable:
- Lawful Interception: In this case the Cell-ID format is expected by the authority,
- Routing : Cell-ID as well as INSEE Code or Postal Code can be used in order to route the session depending on the calling party location,
- Charging: Cell-ID as well as INSEE Code or Postal Code can be used by the operator
- Emergency call: routing is performed depending on the subscriber location after LRF query (Cell-ID)
- Supplementary services: some supplementary services can be different depending on the subscriber location ( Outgoing Call Barring)

To the end of the present document, the following definitions applies, by default the missing abbreviations or missing definitions are intended to be given by reference to the SIP standards and the IMS standards.

Concerning the IMS networks:
- A node is an element of an IMS network which is not a data link.
- A client is a node requesting a task to be done over the network
- A server is a node performing the task.
- A gateway is a node that transfers the task to another network.
- A proxy is a server (a computer system or an application) of a network that performs the task of reducing the complexity of requests over the network between a set of nodes. Proxies add structure and encapsulation to distributed networks.
- An interface is a device able to adapt by software or hardware the data exchange between devices to achieve information transmission between said devices.

Concerning the SIP protocol :
- A user equipment (UE) is a node providing User Provided Location Information (UPLI);
- A P-CSCF ( Proxy- Call Session Control Function) is a node receiving the UPLI from a UE.
- A PCRF(Policy and Charging resource function) is a node, providing Network Provided Location Information (NPLI) to P-CSCF nodes on request from the P-CSCF nodes.
- A S-CSCF( Serving - Call Session Control Function) is a server for SIP protocol.
- A BGCF is a Breakout Gateway Control Function.
- A MGCF is a Media Gateway Control Function.

As a matter of fact, UPLI, NPLI are examples of formats of location information concerning user equipments connected to the network. Other formats exist to represent such location information, as an "INSEE" code (INSEE) representing an official geographical information on a city or an administrative division of a given country, or as a postal code (PC).

As explained above, such format being variable was grouped under a unique variant format called UPLI for user equipments, the former SIP protocol was so mainly devised to accept and carry one and only one location information. In the SIP protocol, P-Access Network Information (PANI) headers are so practically devoted to contain and transport one user location information without interacting on the information. Thus, with SIP, practically, each PANI header contains a specific user location format. Hence, to transmit user location information in several formats, over an IMS network is possible by using as many PANI headers within the same SIP packet as location formats received, which results in a failure of the session when the recipient is only able to support a single PANI header. The node within the network where the session is lost is the first node which is not devised to accept several PANI headers per SIP message. The same conclusion is drawn for a PANI header containing multiple subscriber location information, the SIP stack of the IMS nodes being only in practice, designed for processing one PANI header containing one subscriber location information.

Again, such a situation fosters neither the network interoperability nor the retrofit of existing networks with new components, since their new capabilities in terms of acceptation of multiple PANI headers within the same packet are cancelled in existing networks.

From another point of view, an interface, in information systems, is known in the art prior to the invention, as being a feature which enables data exchange between two different devices, by adaptation or conversion of the data format to achieve a transmission of information, understood by both the different devices. An interface can be defined also as a data converter in the logical electronic world, being the analog of an energy converter in the analogical electronic world.

Within this context, the general concept of the invention is to implement an interface to perform subscriber location format adaptation in a given IMS node, as for instance in a P-CSCF, a S-CSCF or a BGCF, in order to avoid the sending, in SIP messages, by the given node, of subscriber location information in useless formats, towards the rest of the IMS network. More specifically, the effect of the invention is obtained by the interface sending only a subscriber location format or formats which is known to be adapted and so will be accepted by the next node involved in the SIP session serviced by the given node. This adaptation can be realized in the given IMS node, with respect to time, statically or dynamically.

Statically, the information about the next node capability is settled, as an a priori knowledge, in a table of the interface and the content of the table does not change with time, being the same for every SIP session serviced by the given node.

Dynamically, the information about the next node capability is queried by the interface over the IMS network by the given node periodically.

Within this context, the invention concerns so:
- A Session Initiation Protocol node comprising an interface between a subscriber location input format for the node and a subscriber location output format for the node.

In variants:
- the interface is static.
- the interface is dynamic.
- the subscriber location input format comprises a single subscriber location format.
- the subscriber location input format comprises multiple subscriber location formats.
- the subscriber location output format comprises a single subscriber location format.
- the subscriber location output format comprises multiple subscriber location formats.
- the interface encapsulates the subscriber location output format in a Private Access Network Information header.
- the static interface comprises a static link between a static internet protocol address and the subscriber location output format.
- the dynamic interface comprises a dynamic link between a dynamic internet protocol address and the subscriber location output format.
- the subscriber location input format is a first subset of elements of a set of subscriber location formats, the set comprising the following elements: User Provided Location Information (UPLI) format, Network Provided Location Information (NPLI) format, postal code (PC) format and "INSEE" code format.
- the subscriber location output format of the interface is a second subset of the set.
- the node is used, in a Session Initiated Protocol (SIP) session over an internet multimedia protocol session (IMS) network, in which the subscriber location output format is sent to a SIP next node and in which the subscriber location output format is statically configured to a multiple subscriber location format capability of the SIP next node.
- the node is used, in a Session Initiated Protocol (SIP) session over an internet multimedia protocol session (IMS) network, in which the subscriber location output format is sent to a SIP next node and in which the subscriber location output format is dynamically configured to a multiple subscriber location format capability of the SIP next node.

The embodiments of the invention are described below in reference to the ordinals mentioned in parenthesis in the following list of figures, in which:

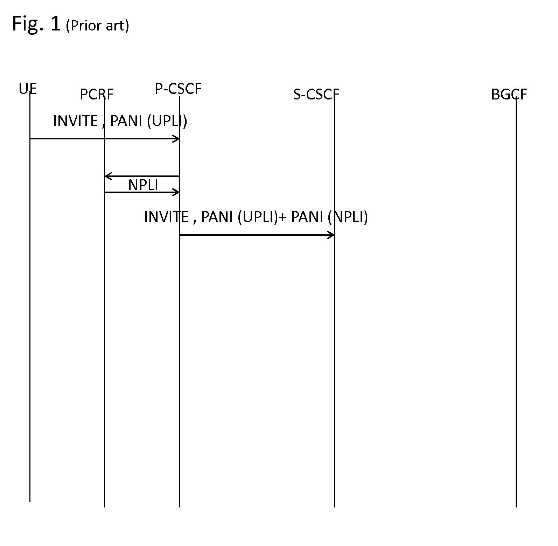

- Fig.1 shows the SIP protocol in prior art and failure of a SIP session in which a PANI header comprising multiple subscriber location formats within the header or multiple headers indicating multiple subscriber location formats are discarded by the SIP stack of a conventional S-CSCF SIP node. On this figure the UPLI + NPLI information are transported up to and input into a S-CSCF in a INVITE request and discarded at the output S-CSCF node, not being sent to a BGCF.

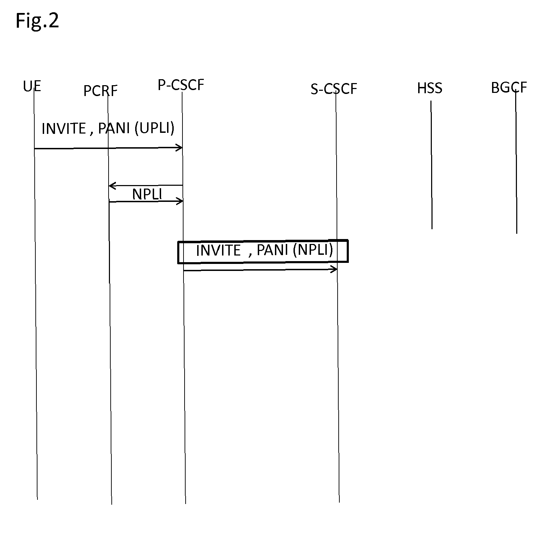

- Fig.2 shows the SIP protocol with static implementation of the invention in which an interface conforming to the teaching of the invention is implemented on a P-CSCF receiving a NPIL(from PCRF )+ UPLI( from a UE) as input subscriber location format and sending in response a NPLI as output subscriber location format (to a S-CSCF), thus providing, for instance an administration with a trusted location (network provided) for a user equipment.

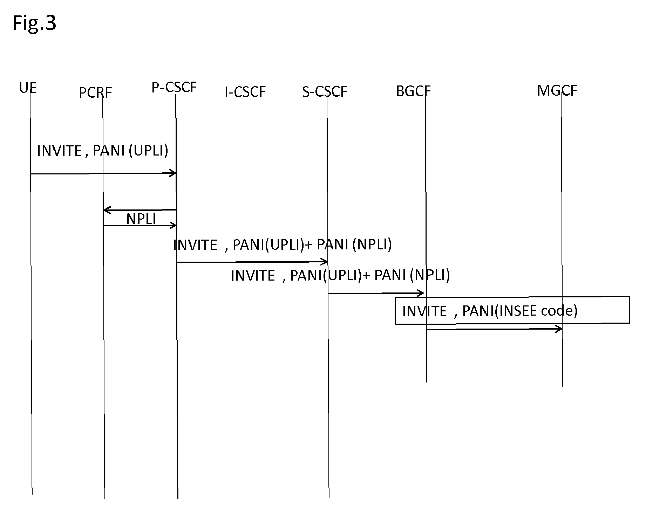

- Fig.3 shows the SIP protocol with a static implementation of the invention in a S-CSCF SIP node in which an INVITE request comprising an input PANI header with UPLI and or + NPLI information is sent to a MGCF node as an output PANI header comprising INSEE code information only.

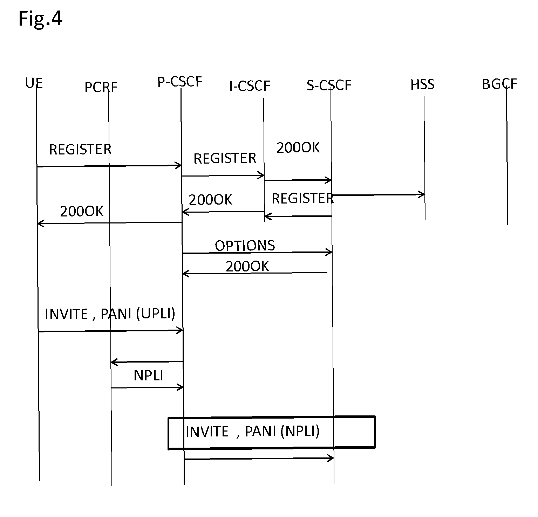

- Fig.4 shows the SIP protocol with a dynamic implementation of the invention in a P-CSCF SIP node. In this case a REGISTER phase is first performed between a UE, a P-CSCF, a S-CSCF and an HSS ( central database of an IMS network). Then, an OPTIONS request is sent from the P-CSCF to the S-CSCF to obtain by a 200 OK response, information on the capability of the S-CSCF concerning the desirable multiple subscriber location support for the S-CSCF. Taking into account this capability, through normalized messages, the P-CSCF interface transmits then only the desirable format to the S-CSCF during a SIP session, here the NPLI only output format from a UPLI + NPLI input format is illustrated.

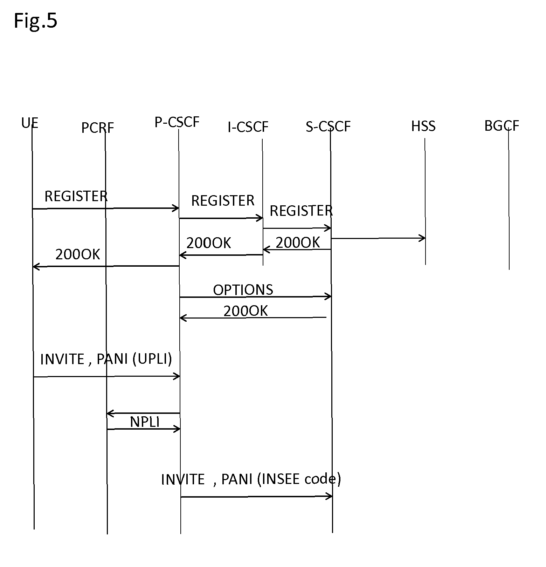

- Fig.5 shows the same situation as in figure 4 with an input format being still UPLI+NPLI and an output format being a national code ( INSEE code or postal code ) which is here an INSEE code.

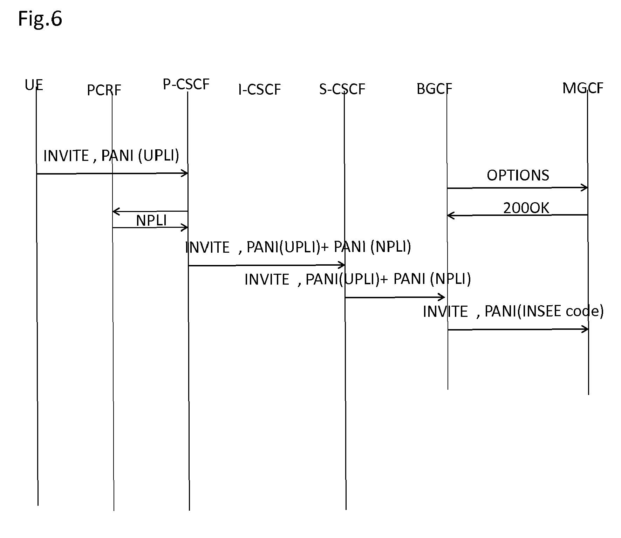

- Fig.6 shows the dynamic implementation of the interface of the invention in a BGCF which dialogs with a MGCF to obtain its desirable multiple subscriber location support. As a result, an INSEE code, being a subscriber location output format, encapsulated in an output PANI header is sent to the MGCF when the BGCF receives a PANI header containing UPLI + NPLI subscriber location input format in an input PANI header.

In reference to Fig.1, we can describe a SIP session as a way for a first user "user1" to be connected to a second user "user2" via an IMS network, which is a peculiar IP network, thanks to a transaction, in order to inform about its user or subscriber location. The SIP session conforms to a protocol (SIP protocol) described in the Request For Comments 3455 (RFC3455) of the normalization organization called "IETF". The SIP protocol uses for 3G telephone networks, a set of private Session Initiation Protocol headers (P-headers) normalized by the 3rd-Generation Partnership Project (3GPP).

Some of these P-headers are called Protocol Access Network Info (PANI) headers and are used for determining the geographical localization of user1. Although the RFC3455 authorizes several PANI headers in the same request message, no method of implementing such feature is mentioned. As a result, there is a potential incompatibility in nodes able to support multiple PANI headers and nodes only able to support a unique PANI header, as is the case for numerous older equipments still active. As a result also, no connection can be established between user1 and user2 if it involves the transmission of several PANI headers and at least one node on the transmission link, supports only one PANI header. The situation of figure 1 which is prior art reflects such a limitation at the level of a P-CSCF node.

The connection process can be described as below:
- A user equipment (UE) sends to a P-CSCF, an INVITE request with a single PANI header called UPLI( User Provided Location Info), corresponding to the localization information transmitted to the network by said UE, about himself.
- The P-CSCF sends a request to a server (the PCRF) able to send back to the P-CSCF a complementary PANI header called a NPLI ( Network Provided Location Info)
- The P-CSCF forwards the INVITE request with both the UPLI and NPLI headers to an S-CSCF which is accepts only one PANI header.

In the above situation, as the SIP stack of the S-CSCF does not support multiple PANI, the SIP session is lost and no identification of the user localization will be provided over the IMS network thanks to the SIP protocol.

The invention is hereafter described in a static form in reference to figure 2 and 3, where it is implemented in the configuration settled in each product or node of an IMS network which has to send a single subscriber location whereas it receives and can process multiple subscriber locations.

In a first static embodiment of the invention, given in reference to Fig.2, a static implementation of the invention is described. Here, the P-CSCF is statically programmed by an operator when installed in order to be fitted with a PANI format adaptation depending on the product capability of the S-CSCF, which is here the next node after the P-CSCF in the SIP session. Here the statically programmed P-CSCF retransmits only one output PANI header with NPLI to the S-CSCF, though it receives UPLI + NPLI in a single input PANI header or in two separated input PANI headers.

The interface enables so the P-CSCF device to forward successfully the INVITE request over the network to the S-CSCF. In a preferred mode, if the S-CSCF is only able to support one PANI header, only the NPLI header will transmitted, as it enables a trusted location as compared to the UPLI.

The programming of the P-CSCF can be adapted in a static table in order to take into account as many S-CSCF with different IP addresses as the P-CSCF can address or is in connection with over the IP network. As a result, the interoperability of the nodes of different manufacturers or of different technologies in terms of multiple PANI headers support or multiple subscriber locations support in a single PANI header, can be compensated for, with only a static knowledge of the capabilities of the S-CSCF node relaying the INVITE request. In this embodiment, a selection between several PANI headers is operated and illustrated, in order to retain only one which is re-transmitted through the P-CSCF implementing the invention.

In a second static embodiment, shown in figure 3, the UE is connected to the P-CSCF which transmits UPLI and NPLI header to a S-CSCF and to a BGCF with multiple PANI header support. However, the BGCF is connected to a MGCF demanding an INSEE code PANI header. Here, a table will be generated in the BGCF to provide a correspondence between each and every UPLI and NPLI couple of headers and a unique INSEE code. This correspondence or conversion can be programmed by an operator installing the BGCF, with only a priori knowledge of the MGCF to which the BGCF is connected. In this second static embodiment, a correspondence between several PANI headers is provided in order to generate only one PANI header adapted to the MGCF, which is re-transmitted through the S-CSCF implementing the interface of the invention.

This effect can be achieved by a function the result of which is an INSEE code and arguments are the NPLI and UPLI information or only the NPLI as well, or other information about subscriber location, transported by a PANI header and enabling to generate the INSEE code. For instance, a second table indicating by a unique code this PANI processing can be created to indicate such desirable correspondence for any other MGCF node in contact with the BGCF, such MGCF having a single PANI header support with INSEE code. It has to be noticed that the invention can be adapted to any output format that can be calculated from the input format information present in the PANI, by the way of a function, a table or a database. The network database (HSS) might be used for such determination.

With this second embodiment, on an IMS network, it is so possible to statically program nodes having a multiple PANI headers support to have them route identification information to other nodes having a single PANI header support, over the network or demanding different information on subscriber location in PANI headers sent to these other nodes.

The invention is hereafter described in a dynamic form, in reference to the figures 4, 5 and 6 where it is requested the subscriber location capability, for instance multiple or single PANI header support and nature of the information to send in such PANI, of an IMS remote node to which a host node implementing the invention has to retransmit subscriber locations.

It is observed that in the first and second embodiments, the single capability and the nature of the information to retransmit over the node implementing the invention is known a priori. For instance in the first embodiment, one PANI header of NPLI nature is required and in the second embodiment, one PANI header of INSEE code nature is required. In this mode, no change of the IMS standard is required to implement the invention on any IMS network.

In a dynamic third embodiment of the invention, in reference to fig. 4, a UE node is connected to a P-CSCF node. The P-CSCF, after a registration phase corresponding to a REGISTER request, is able to send an OPTIONS request to the S-CSCF and receive a 200 OK SIP response. In this case, the product in charge of the S-CSCF is also in charge of other IMS components such as I/E-CSCF for resolving addresses and BGCF and therefore can indicate the product capabilities regarding the support of PANI headers support, concerning in particular, number and nature, which are desirable for the product.

In such a configuration, OPTIONS request is enriched to query the capabilities of the S-CSCF in terms of PANI support. This query enrichment can be derived in content and based on what is currently used for RCS (Rich communication suite which has the key capability of discovery feature), as the usage of a tag in a Contact and Accept contact header.

In order to achieve such a result, the "200 OK" response to "OPTIONS" request is enriched to carry out the capability of the product S_CSCF in term of PANI headers support.

An Accept Contact header supported by the 200 OK SIP message of the current releases of IMS and SIP, can report the capabilities:
- Multiple PANI headers support;
- Multiple subscriber location within a single PANI header ( successive formats as among other: Cell-ID of the network cell from which the user1 entered the network, INSEE code, ... as detailed in the SIP protocol norm.)
- Single PANI header support with preference for UPLI;
- Single PANI header support with preference for NPLI;
- Single PANI header support with preference for national format (INSEE code or postal code);

As a result, this third embodiment can perform in response to the information gained in real time on the PANI support capability of the next node in the IMS network, in the SIP session, here S-CSCF, the same operations on incoming or input PANI headers to produce output PANI headers, that were detailed for the static embodiments above:
- selection from several to one header (here single PANI header support with preference for NPLI)
- conversion from a set of input PANI headers or a single output PANI header not in the set
- conversion from a first input PANI header or to a second output PANI header distinct from the first input PANI header.
- Conversion between several PANI headers in a first subset of a set comprising UPLI, NPLI, INSEE code and postal code an d a second subset of the set.

By subset, it is intended a singleton having one element of a set or having several elements of the set. The general effect of the interface of the invention is so the conversion of a first subset of the set to a second subset, not having the same elements of the set as the first subset.

In the dynamic case, the interface processing is done during a SIP session and so in real-time, minimizing the configuration operations required in the static mode and enabling the "hot-replacement" of S-CSCF in an IMS network, as far as SIP is concerned.

In a dynamic fourth embodiment, illustrated in figure 5, the same structure as in the third embodiment is provided but the output format for the P-CSCF is an INSEE code, in response to an NPLI+UPLI input format.

In a dynamic fifth embodiment, in reference to figure 6, the UE is connected to the P-CSCF which transmits UPLI and NPLI headers to a S-CSCF and to a BGCF with multiple PANI header support, here NPLI + UPLI. However, the BGCF is connected to a MGCF demanding an INSEE code PANI header.

Here, the BGCF is provided with means for sending an OPTIONS SIP request enriched as in the third embodiment, to receive the MGCF PANI header format desirable for said MGCF ( here INSEE code) within a 200 OK SIP response. The BGCF is also provided with the interface of the invention which is also means for adapting the subscriber location input format to the subscriber location output format, by transmitting the INSEE code when receiving the NPLI+UPLI format.

Here, the BGCF have means to perform PANI conversion from an input multiple PANI headers format which is here UPLI with NPLI, to transform them in INSEE code output PANI header.

It can be seen finally, that an IMS node with SIP capability conforming to the teaching of the invention has always, in its embodiments, an interface for PANI headers. The input format for the interface is variable and the output PANI header format for the interface is the desirable PANI header format for the next node in the SIP session. The interface for the invention is so, generally defined as an interface on a first node that outputs a PANI header format desirable for the next SIP node, in the SIP session, the next node being the node to which the PANI header has to be sent over the network data links.

It is thus possible to apply the above rules of conception to populate any P-CSCF, S-CSCF or BGCF of an IMS network supporting the SIP protocol session over, with interfaces conforming to the teaching of the present invention.

The invention is susceptible of industrial application or useful in telecommunication networks.

## Claims

**1.** A Session Initiation Protocol node comprising an interface between a subscriber location input format for the node and a subscriber location output format for the node.

**2.** Node according to claim 1 in which the interface is static.

**3.** Node according to claim 1 in which the interface is dynamic.

**4.** Node according to claim 1 in which the subscriber location input format comprises a single subscriber location format.

**5.** Node according to claim 1 in which the subscriber location input format comprises multiple subscriber location formats.

**6.** Node according to claim 1 in which the subscriber location output format comprises a single subscriber location format.

**7.** Node according to claim 1 in which the subscriber location output format comprises multiple subscriber location formats.

**8.** Node according to claim 1, in which the interface encapsulates the subscriber location output format in a Private Access Network Information header.

**9.** Node according to claim 2 in which the static interface comprises a static link between a static internet protocol address and the subscriber location output format.

**10.** Node according to claim 3 in which the dynamic interface comprises a dynamic link between a dynamic internet protocol address and the subscriber location output format.

**11.** Node according to claim 1 in which the subscriber location input format is a first subset of elements of a set of subscriber location formats, the set comprising the following elements: User Provided Location Information (UPLI) format, Network Provided Location Information (NPLI) format, postal code (PC) format and "INSEE" code format.

**12.** Node according to claim 11 in which the subscriber location output format of the interface is a second subset of the set.

**14.** Use of a node according to claim 2, in a Session Initiated Protocol (SIP) session over an internet multimedia protocol session (IMS) network, in which the subscriber location output format is sent to a SIP next node and in which the subscriber location output format is statically configured to a multiple subscriber location format capability of the SIP next node.

**15.** Use of a node according to claim 3, in a Session Initiated Protocol (SIP) session over an internet multimedia protocol session (IMS) network, in which the subscriber location output format is sent to a SIP next node and in which the subscriber location output format is dynamically configured to a multiple subscriber location format capability of the SIP next node.
